## Europäisches Patentamt
## European Patent Office
## Office européen des brevets

(19)

(11) Publication number: **0 027 733**
**A1**

(12) # EUROPEAN PATENT APPLICATION

(21) Application number: **80303685.4**

(22) Date of filing: **17.10.80**

(51) Int. Cl.³: **C 08 F 10/00**
**C 08 F 4/64, C 08 F 10/02**
**C 08 F 4/60, C 08 F 32/04**

(30) Priority: **19.10.79 US 86486**
**19.10.79 US 86498**

(43) Date of publication of application:
**29.04.81 Bulletin 81/17**

(84) Designated Contracting States:
**BE DE FR GB NL SE**

(71) Applicant: **ARCO POLYMERS, INC.**
**1500 Market street**
**Philadelphia, Pennsylvania 19101(US)**

(72) Inventor: **Harris, James Joseph**
**363 Lime Oak Drive**
**Pittsburgh Pennsylvania 15235(US)**

(72) Inventor: **Hostetler, Donald Edmund**
**405 Franklin Heights Drive**
**Monroeville Pennsylvania 15146(US)**

(74) Representative: **Cropp, John Anthony David et al,**
**MATHYS & SQUIRE 10 Fleet Street**
**London, EC4Y 1AY(GB)**

(54) Process for polymerisation of alpha-mono olefins, supported catalyst therefor and method of preparing said catalyst.

(57) Olefin polymers having low metal and chloride residues and larger polymer particle size than polymer particles produced by an unsupported catalyst can be obtained if there is used as the catalyst the combination of an organo-aluminium compound and the product of (1) reducing a transition metal compound with an organomagnesium compound in the presence of a support material selected from the group consisting of silica, alumina, or mixtures thereof and (2) reacting excess organomagnesium compound with a deactivation agent, such as hydrogen chloride.

EP 0 027 733 A1

Croydon Printing Company Ltd.

PROCESS FOR POLYMERISATION OF ALPHA-MONO OLEFINS, SUPPORTED

CATALYST THEREFOR AND METHOD OF PREPARING SAID CATALYST

The present invention relates to the polymerization of olefins in the presence of catalysts known in the
art as Ziegler catalysts, and to novel catalysts therefor.

Ziegler catalysts are commonly formed by reducing
a transition metal compound with an organometallic compound.
The reduced transition metal compound is then used, in
conjunction with an activator, which may be the same or a
different organometallic compound, to polymerize olefins,
especially ethylene, in the presence of an inert solvent.
A molecular weight regulator, such as hydrogen, may be used
with these catalyst systems, as taught by Vandenberg in
U.S. 3,051,690.

Ziegler et al, in U.S. 3,070,549 teach that catalysts can be prepared by reduction of transition metal salts
with organometallic compounds of magnesium or zinc, either
alone or in combination with organoaluminum compounds.
Yields in the order of 500 grams of polyethylene per gram
of transition metal were obtained.

Ziegler et al, in U.S. 3,392,162 teach that the organometallic compound used as reducing agent for the transition metal salts can be mixed complexes of organolithium and organoaluminum, organomagnesium or organozinc compounds. Similar low yields of polyethylene were obtained.

Harris et al, in U.S. 4,136,058, teach that high efficiency catalysts are produced by reducing transition metal compounds with organomagnesium compounds and then deactivating any excess organomagnesium compound by adding a deactivating agent, such as hydrogen chloride. The polymer particle size produced by this system is normally less than 50 microns, which makes handling of the polymer powder difficult in some processes.

It has now been found that when organomagnesium compounds are used to reduce a transition metal compound in the presence of silica or alumina, to form a supported catalyst, which is subsequently to be activated by an organoaluminum compound to polymerize olefins, the catalyst activity is still very high and the polymer powder formed is essentially all of particle size greater than 100 microns. The catalyst activity is greatly enhanced by deactivation of the excess reducing organomagnesium compound subsequent to reduction of the transition metal compound on the support and prior to use as a catalyst. The deactivation agent may be any of the known chemicals which decompose organomagnesium compounds, such as hydrogen halides, water, alcohols or combinations thereof.

The catalyst of the invention comprises a reaction product from the steps of (1) depositing a transition metal compound on a support material selected from the group consisting of silica, alumina and mixtures thereof, (2) reducing the transition metal compound with an excess of an organomagnesium compound or complexes of these with solubilizing agents and (3) reacting any excess reducing organomagnesium compound with a deactivation agent.

Alternatively, the organomagnesium compound may be first deposited on the support material and the transition metal compound then added thereto to be reduced.

It is also possible to add the organomagnesium compound and the transition metal compound simultaneously to a slurry of the support material to form a reduced supported catalyst.

The olefin polymerization process of the invention involves subjecting an alpha-olefin in an inert hydrocarbon medium, or in the gas phase, to low pressure polymerization conditions in the presence of a catalytic amount of the above described catalyst and sufficient organoaluminum compound to activate the catalyst and scavenge any undesirable impurities in the system.

The silica, alumina, or silica-alumina support material is prepared for use by calcination at temperatures between 100°C and 1000°C for times between 2 and 20 hours. The temperature of calcination is chosen such that the sintering temperature of the support is not exceeded. The support material is then cooled under nitrogen or other inert atmosphere to room temperature. In one method, the support is then treated in inert hydrocarbon solvent with the suitable transition metal compound and allowed to age. The hydrocarbon slurry of the supported transition metal compound is then reduced with the organomagnesium compound.

The amount of transition metal compound supported on the support material may be between 0.05 to 2.0 millimoles per gram of support. Preferably 0.2 to 0.8 millimoles per gram of support is used.

The catalysts of the invention may be prepared in the polymerization reactor, but they are preferably prepared in a separate "catalyst reactor" prior to adding the catalysts to the polymerization reactor by admixing inert hydrocarbon solutions of the organomagnesium reducing compounds and the transition metal compound in the presence of the support material. The deactivation agents may be added to the catalyst reactor or to the polymerization reactor.

If the polymerization is run in a hydrocarbon slurry, it is convenient, although not essential, to use the same hydrocarbon for preparing the catalyst solution. Suitable hydrocarbons are the paraffinic and cycloparaffinic hydrocarbons having from 4 to 10 carbon atoms, such as isobutane, pentane, isopentane, hexane, heptane, octane, decane, cyclopentane, cyclohexane, methylcyclohexane and aromatic hydrocarbons, such as benzene, xylene, toluene and the like. The choice of hydrocarbon may vary with the olefin to be polymerized. The use of hydrocarbons of 6 to 10 carbon atoms will reduce the pressure required for the reaction and may be preferred for safety and equipment cost considerations.

The concentration of premixed catalyst in the hydrocarbon diluent is relatively unimportant, except to the extent that the concentration is one suitable for providing the desired catalyst concentration during the polymerization process. It is convenient to prepare catalyst solutions containing 0.01-1.5 moles of transition metal compounds per liter of solution.

The organomagnesium compounds suitable for reducing the transition metal compounds may be the alkyl, aryl, aralkyl or alkaryl derivatives of magnesium and complexes of these with compounds which solubilize the magnesium compounds, such as the organometallic compounds of aluminum, or zinc. The reductions may be carried out at temperatures between -100° and 125°C, preferably between -30° and 50°C. Suitable alkyl derivatives are those having 1 to 20 carbon atoms such as methyl, ethyl, propyl and hexyl. The aryl derivatives may be exemplified by phenyl, tolyl, xylyl and napthyl. Examples of aralkyl groups are the benzyl and phenylethyl radicals. Especially suitable organomagnesium compounds in the invention are the organomagnesium compounds of formula RMgX, where R may be alkyl having 1 to 20 carbon atoms or aryl having 6 to 10 carbon atoms and X may be R, halogen, -OR. Complexes of organomagnesium compounds with organoaluminum compounds, such as $Mg[Al(C_2H_5)_4]_2$ or with ethers, such as Grignard reagents, are also especially suitable.

The amount of organomagnesium reducing agents used is not critical. The molar ratio of reducing agent to transition metal compound may vary from 0.25 to 100 or above, although ratios of from 1 to 30 are preferred. Higher ratios may be used, but are not required. There is normally an excess of organomagnesium compound remaining after the reduction is completed.

The deactivation agent for the excess reducing organomagnesium compound may be any of the chemical sub-stances known to destroy or react with organomagnesium compounds. Especially suitable is anhydrous hydrogen chloride. Also suitable are hydrogen bromide, water, acetic acid, alcohols, carbonic acid, phosphorus pentachloride, silicon tetrachloride, acetylene, and mixtures thereof. Other suitable substances may be the compounds such as those discussed in "Grignard Reactions of Nonmetallic Substances," by Kharrasch and Reinmuth, Prentice-Hall, 1954.

The amount of deactivation agent used depends upon the quantity of organomagnesium compound used to reduce the transition metal compound. Sufficient agent must be used to substantially destroy any excess compound. In the case of gaseous agents, such as hydrogen chloride, it is expedient to saturate the solution of catalyst components with the gas when the catalyst is premixed in a catalyst reactor. Preferrably, about 2 moles of deactivator per mole of magnesium compound is used to ensure the destruction of the excess organomagnesium compound.

The transition metal compounds useful in the invention may be any compound of the metals of Groups IV-B, V-B, VI-B and VIII of the Periodic System. Typical metals of the groups are, for example, titanium, zirconium, hafnium, vanadium, niobium, tantalum, chromium, molybdenum, tungsten, iron, cobalt and nickel. Any compound of these metals such as the halides, oxyhalides, alcoholates such as the titanates of aliphatic alcohols having 1 to 6 carbon atoms in the alkyl groups, acetates, benzoates, acetylacetonates and the dicyclopentadienyl salts may be used. Especially useful are the halides and alkoxides of tetravalent titanium such as titanium tetrachloride and tetrabutyltitanate.

The activator-scavenger used in the polymerization process may be any of the organoaluminum compounds known to be useful in Ziegler polymerization systems. Especially suitable are, for example, alkylaluminums where each alkyl group has up to 16 carbon atoms, such as triethylaluminum, tri-n-propylaluminum, triisobutylaluminum, trihexylaluminum, diisobutyl aluminum hydride and mixed trialkylaluminums. Those alkyls having less than 10 carbon atoms are preferred because of the greater expense resulting from higher alkyls.

The olefins polymerizable with the catalyst and process of this invention are those mono-olefins having 2 to 20 carbon atoms, especially ethylene, propylene, 1-butene, 1-hexene, norbornene and the like. Mixtures of ethylene with the other alphaolefins may be polymerized to give copolymers with a wide range of properties.

In a typical catalyst preparation by premixing the components in a reactor flask, the reduction of transition metal compound may be carried out at temperatures between -100°C and 125°C, but is preferably carried out between -30°C and 50°C. The reagents are mixed at, for example, 0°C and, after reduction is complete, the mixture is allowed to warm up to room temperature or above and the deactivation agent for the reducing organomagnesium compound added. The catalyst may be used immediately or allowed to age for periods varying from 5 minutes to several days.

The polymerization of olefins is conveniently carried out in an autoclave or other suitable pressure apparatus. The apparatus is charged with solvent, if used, and an activator-scavenger added and allowed to equilibrate. The catalyst is then added and the reactor pressured with

olefin and a molecular weight regulator such as hydrogen, if used. Polymerization pressures depend mainly on the limitations of the equipment used, but a normal range of pressures would be from 1 to 100 atmospheres with a preferred range of from 2 to 50 atmospheres. Temperatures of polymerization usually are from 0°C to 150°C, preferably between 50° and 110°C. The catalyst concentration suitable for the invention are between 0.001 and 10 millimoles of transition metal per liter of solvent, preferably between 0.005 and 0.25 millimoles per liter.

The invention is further illustrated by, but not limited by, the following examples.

## Example I

### a. Preparation of Catalyst

A three neck 50 ml. flask equipped with stirrer, thermometer and nitrogen supply was charged with 15 ml. of dry hexane and 0.7 g. of silica (surface area 340 meters 2/g.) and dried at 540°C in dry air . The silica-hexane slurry was then treated with 0.28 ml. of 0.5 molar TiCl$_4$ (0.2 millimoles TiCl$_4$/gram silica) and the contents aged 30 minutes at room temperature. Then 1.87 ml. of 0.75 molar butyl ethyl magnesium solution in heptane (2.0 millimoles/gram silica) was added and reacted for 1 hour. The resulting slurry was saturated with anhydrous HCl gas and aged for another hour.

### b. Polymerization of Ethylene

To a one-gallon stainless steel autoclave was charged, under dry nitrogen, 6.0 ml. of 0.5 molar triisobutyl aluminum activator, 4.0 ml. of the catalyst slurry
from (a) containing 0.15 g. $SiO_2$. The reactor was closed
and 2 liters of isobutane was added at 25°C. The equilibrium pressure was 70 psig. Hydrogen was then introduced
until the static pressure was 125 psig. The reactor temperature was then increased to 93°C and ethylene was introduced at 525 psig. After one hour at 93°C, there was
obtained 389.4 g. of polyethylene of uniform particle size,
95% larger than 100 microns. The yield of polymer was
270,000 g. PE/g. Ti and 2596 g.PE/g.$SiO_2$. The polyethylene
had a melt index of 13.6 g./10 minutes under an applied load of 2160 g. at 190°C, and a density of 0.970 g./cc.

Repeat of the above polymerization with a catalyst
not supported on silica, gave a fine powder with 95% of the
polymer particles being smaller than 50 microns.

### Example II

a.  Preparation of Catalysts

Various catalysts were prepared by the method of Ia
using titanium tetrachloride (except where indicated) and
various support materials. The support was calcined at 540°C
(except where indicated). The deactivating agent in all cases
was hydrogen chloride in about a 2:1 ratio of HCl:Mg.

b.  Polymerization of Ethylene

Polymerization of ethylene was carried out as in
Example Ib using 0.02-0.04 millimoles of the catalysts prepared above. Either triethylaluminum or triisobutylaluminum was used as activator-scavenger at a concentration of 1.5 millimoles per liter of solvent. The results are shown in Table I.

Table I

| Run No. | Ti, mm per g. $SiO_2$ | Mg/Ti | PE Yield g/g Ti | Polymer Size $>106\mu$, % |
|---------|---------|-------|---------|---------|
| 1 | 0.1 | 20 | 511,000 | 92 |
| 2 | 0.2 | 10 | 425,000 | 90 |
| 3 | 0.2 (a) | 10 | 242,000 | 92 |
| 4 | 0.2 (b) | 10 | 252,000 | 93 |
| 5 | 0.2 (a,c) | 10 | 288,000 | 94 |
| 6 | 0.2 (d) | 10 | 235,000 | 88 |
| 7 | 0.2 | 8 | 294,000 | 94 |
| 8 | 0.2 (e) | 8 | 225,000 | 93 |
| 9 | 0.2 | 7 | 271,000 | 88 |
| 10 | 0.4 | 5 | 137,000 | 92 |
| 11 | 0.4 (f) | 4 | 43,000 | 87 |
| 12 | 0.4 (g) | 4 | 208,000 | 82 |
| 13 | 0.4 | 2.5 | 135,000 | 82 |
| 14 | 0.8 | 4 | 92,000 | 98 |
| 15 | 0.8 (h) | 2 | 48,100 | 96 |
| 16 | 1.6 | 2 | 63,400 | 80 |

(a) Silica dried 16 hours at 820°C in air-cooled in $N_2$ from 200°C

(b) Transition metal compound was 50/50 Tetrabutyltitanate/$TiCl_4$

(c) Transition metal compound was 3TBT/TiCl$_4$

(d) Silica dried at 360°C - Transition metal compound was TBT/3TiCl$_3$

(e) Transition metal compound was TBT

(f) Silica-alumina (75 - 25% by weight) support

(g) Transition metal compound was tetrapropyltitanate (TPT)

(h) Alumina support - vacuum dried at 120°C


## Example III

### a. Preparation of Catalyst

A three neck 25 ml. flask equipped with stirrer, thermometer and nitrogen supply was charged with 20 ml. of dry hexane and 0.54 g. of silica (surface area 340 meters$^2$/g. and dried 4 hours at 540°C in dry air). The silica-hexane slurry was then treated with 0.21 ml. of 0.5 molar TiCl$_4$ (0.2 millimoles TiCl$_4$/gram silica) and the contents aged 10 minutes at room temperature. Then 1.43 ml. of 0.75 molar butyl ethyl magnesium solution in heptane (2.0 millimoles/ gram silica) was added and reacted for 1 hour. The resulting slurry was saturated with anhydrous HCl gas and aged for another hour.

### b. Polymerization of Ethylene

To a one-gallon stainless steel autoclave was charged, under dry nitrogen, 6.0 ml. of 0.5 molar triisobutyl aluminum activator, 4.0 ml. of the catalyst slurry from (a) containing 0.15 g. SiO$_2$. The reactor was closed and 2 liters of isobutane was added at 25°C. The equilibrium pressure was 70 psig. Hydrogen was then introduced until the static pressure was 105 psig. The reactor temperature was then increased to 80°C, 22 g. 1-butene added, and ethylene was introduced at 450 psig. The ethylene pressure was maintained at 450 psig for 1 hour. Simultaneously, 2.75 g. of 1-butene was added every 5 minutes until an addition 22 g. had been added. After one hour at 80°C, there was obtained 210 g. of ethylene-butene copolymer of uniform particle size, 90% of the particles being larger than 106 microns. The polyethylene copolymer had a melt index of 2.1 g./10 minutes under an applied load of 2160 g. at 190°C, and a density of 0.948 g./cc.

## Example IV

### a. Preparation of Catalyst

A three neck 25 ml. flask equipped with stirrer, thermometer and nitrogen supply was charged with 15 ml. of dry hexane and 1.27 g. of silica (surface area 340 meters$^2$/g. and dried 20 hours at 815°C in dry air). The silica-hexane slurry was then treated with 0.51 ml. of 0.5 molar TiCl(OBu)$_3$ (0.2 millimoles Ti/gram silica) and the contents aged 30 minutes at room temperature. The TiCl(OBu)$_3$ was made by mixing 0.5 molar solutions of TiCl$_4$ and tetrabutyltitanate in 1/3 ratio. Then 2.6 ml. of 0.59 molar di-n-hexyl magnesium solution in heptane (1.2 millimoles/gram silica) was added and reacted for 1 hour. The resulting slurry was saturated with anhydrous HCl gas (HCl/Mg ratio was about 2.15) and aged for another hour.

b. Polymerization of Ethylene

To a one-gallon stainless steel autoclave was charged, under dry nitrogen, 2.6 ml. of 0.5 molar triethylaluminum activator, 4.0 ml. of the catalyst slurry from (a) containing 0.15 g. $SiO_2$. The reactor was closed and 1.6 liters of isobutane was added at 25°C. The equilibrium pressure was 70 psig. Hydrogen was then introduced until the static pressure was 100 psig. The reactor temperature was then increased to 95°C and ethylene was introduced at 450 psig. After one hour at 95°C, there was obtained 441 g. of polyethylene of uniform particle size, 87% of the particles being larger than 106 microns. The yield of polymer was 307,300 g. PE/g. Ti and 4158 g. PE/g. $SiO_2$. The polyethylene had a melt index of 6.4 g./10 minutes under an applied load of 2160 g. at 190°C, and a density of 0.961 g./cc.

The catalyst prepared in IV (a) was also used to polymerize ethylene at 100°C and 471 psig. The resulting polymer, 163,000 g. PE/g. Ti, had a melt index of 11.2 g./10 minutes and a density of 0.961 g./cc.

## Example V

a. Preparation of Catalyst

A catalyst was prepared as in Example IV (a), except that the di-n-hexyl magnesium was replaced by 2.2 ml. of 0.95 molar solution of Magala 7.5, a Texas Alkyl Company catalyst consisting of 6.5 parts of di-n-butyl magnesium and 1 part of triethylaluminum.

b.  Polymerization of Ethylene

Ethylene was polymerized as in Example IV (b) at 95°C and 440 psig to give 116,770 g. PE/g. Ti.  The polymer had a melt index of 7.5 g./10 minutes and a density of 0.960.

Similar polymerizations could be run using catalysts prepared by reducing complexes of vanadium oxytri-

chloride/TiCl$_4$, tetrapropylzirconate/TiCl$_4$, and tetrapropyl-

zirconate/TBT in place of the TBT/TiCl$_4$ mixture.  The yields

of polyethylene or copolymers would be comparable.

CLAIMS

1.  A catalyst for the polymerization or copolymerization of alpha-monoolefins, in the presence of an
organoaluminum activator, consisting essentially of the
product from the steps of reducing a transition metal compound
with an excess of  organomagnesium compound in the presence
of a support material selected from the group consisting
of silica, alumina and mixtures thereof, and then deactivating the excess organomagnesium compound with a deactivation
agent therefor; said transition metal compoung being
selected from the group consisting of the halides, oxyhalides,
alcoholates of aliphatic alcohols having 1 to 6 carbon atoms
in the alkyl groups, acetates, benzoates, acetylacetonates,
and the dicyclopentadienyl salts of the metals of Groups
IV-B, V-B, VI-B and VIII of the Periodic System; said
organomagnesium compound being selected from the group
consisting of compounds of formula RMgX where R is alkyl
having 1 to 20 carbon atoms, or aryl having 6 to 10 carbon
atoms and X is R, halide, or -OR, and complexes of RMgX
with solubilizing agents; and said deactivating agent being
selected from the group consisting of hydrogen chloride,
hydrogen bromide, water, acetic acid, alcohols, carbonic
acid, phosphorus pentachloride, silicon tetrachloride,
acetylene and mixtures thereof.

2.  The catalyst of Claim 1 wherein said transition metal compound is a compound of titanium, zirconium or vanadium.

3.  The catalyst of Claim 2 wherein said titanium compound is selected from the group consisting of titanium tetrachloride, tetrapropyltitanate, tetrabutyltitanate and mixtures thereof.

4.  The catalyst of any one of claims 1 to 3 wherein said support material is alumina.

5.  The catalyst of any one of claims 1 to 3 wherein said support material is silica.

6.  A method for the preparation of a catalyst for the polymerization or copolymerization of alpha-monoolefins, which consists of reducing a transition metal compound with an excess of organomagnesium compound in the presence of a support material selected from the group consisting of silica, alumina and mixtures thereof, and then deactivating the excess organomagnesium compound with a deactivation agent therefor; said transition metal compound being selected from the group consisting of the halides, oxyhalides, alcoholates of aliphatic alcohols having 1 to 6 carbon atoms in the alkyl groups, acetates, benzoates, acetylacetonates, and the dicyclopentadienyl salts of the metals of Groups IV-B, V-B, VI-B and VIII of the Periodic System; said organomagnesium compound being selected from the group consisting of compounds of formula RMgX where R is alkyl having 1 to 20 carbon atoms, or aryl having 6 to 10 carbon atoms and X is R, halide, or -OR, and complexes of RMgX with solubilizing agents; and said deactivating agent being selected from the group consisting of hydrogen chloride, hydrogen bromide, water, acetic acid, alcohols, carbonic acid, phosphorus pentachloride, silicon tetrachloride, acetylene and mixtures thereof.

7. A process for the polymerization of alpha-monoolefins comprising contacting at least one monoolefin at a temperature of from 0 to 150°C at pressures of from 1 to 50 atmospheres in an inert hydrocarbon solvent with a mixture of an alkylaluminum compound as activator-scavenger and 0.001 to 10 millimoles per liter of solvent of a supported catalyst which is the reaction product from the steps of reducing a transition metal compound selected from the group consisting of the halides, oxyhalides, alcoholates of aliphatic alcohols having 1 to 6 carbon atoms in the alkyl groups, acetates, benzoates, acetylacetonates and the dicyclopentadienyl salts with an excess of an organomagnesium compound in the presence of a support material selected from the group consisting of silica, alumina and mixtures thereof, and then destroying excess reducing organomagnesium compound with a deactivation agent therefore; said deactivation agent being selected from the group consisting of hydrogen chloride, hydrogen bromide, water, acetic acid, alcohols, carbonic acid, phosphorus pentachloride, silicon tetrachloride, acetylene, and mixtures thereof; said transition metal being selected from the metals of Groups IV-B, V-B, VI-B, and VIII of the Periodic System, and said organomagnesium compound being selected from the group consisting of a compound of formula RMgX where R is an alkyl having 1 to 20 carbon atoms or aryl having 6 to 10 carbon atoms and X is R, halide, or -OR, and complexes of RMgX with solubilizing agents.

8. The process of Claim 7 wherein said monoolefin is ethylene, said solvent is hexane, said alkylaluminum activator is triisobutyl aluminum, said transition metal compound is a salt of titanium, and said deactivation agent is hydrogen chloride.

9. A process for the polymerization of monoolefins comprising contacting at least one monolefin at a temperature of from 0 to 150°C at pressures of from 1 to 50 atmospheres in gas phase with a mixture of an alkylaluminum compound as activator-scavenger and a supported catalyst which is the reaction product from the steps of reducing a transition metal compound selected from the group consisting of the halides, oxyhalides, alcoholates of aliphatic alcohols having 1 to 6 carbon atoms in the alkyl groups, acetates, benzoates, acetylacetonates and the dicyclopentadienyl salts with an excess of an organomagnesium compound in the presence of a support material selected from the group consisting of silica, alumina, and mixtures thereof, and then destroying excess reducing organomagnesium compound with a deactivation agent therefore; said deactivation agent being selected from the group consisting of hydrogen chloride, hydrogen bromide, water, acetic acid, alcohols, carbonic acid, phosphorus pentachloride, silicon tetrachloride, acetylene, and mixtures thereof; said transition metal being selected from the metals of Groups IV-B, V-B, VI-B, and VIII of the Periodic System, and said organomagnesium compound being selected from the group consisting of a compound of formula RMgX where R is an alkyl having 1 to 20 carbon atoms or aryl having 6 to 10 carbon atoms and X is R, halide, or -OR, and complexes of RMgX with solubilizing agents.

10. The process of Claim 7 or Claim 9 wherein said monoolefin is ethylene.

11. The process of Claim 7 or Claim 9 wherein said monoolefin is a mixture of ethylene and up to 20% by weight of an alphamonoolefin having 3 to 8 carbon atoms.

**0027733**

European Patent
Office

**EUROPEAN SEARCH REPORT**

Application number

EP 80 30 3685

| Category | Citation of document with indication, where appropriate, of relevant passages | Relevant to claim |
|---|---|---|
| | US - A - 4 136 058 (J.J. HARRIS AND R.E. HAMMOND)<br><br>  * Claims 1-6; column 3, lines 10-48; examples * <br><br>-- | 1-3,6-11 |
| | US - A - 3 787 384 (J. STEVENS AND M. GEORGE)<br><br>  * Claims 1-4; column 3, line 58 - column 3, line 8, lines 56-74; column 4, line 61 - column 5, line 31 * <br><br>-- | 1-5,7, 8,10, 11 |
| A | US - A - 4 039 472 (G.R. HOFF)<br><br>  * Claims 1-10 * <br><br>---- | 1 |

**DOCUMENTS CONSIDERED TO BE RELEVANT**

CLASSIFICATION OF THE
APPLICATION (Int. Cl.³)

C 08 F  10/00
        4/64
        10/02
        4/60
        32/04

TECHNICAL FIELDS
SEARCHED (Int. Cl.³)

C 08 F    10/00-
          10/14
          110/00-
          110/14
          210/00-
          210/16
          4/64
          4/62
          4/68
          4/60
          32/04

CATEGORY OF
CITED DOCUMENTS

X: particularly relevant

A: technological background

O: non-written disclosure

P: intermediate document

T: theory or principle underlying
   the invention

E: conflicting application

D: document cited in the
   application

L: citation for other reasons

&: member of the same patent
   family,
   corresponding document

The present search report has been drawn up for all claims

| Place of search | Date of completion of the search | Examiner |
|---|---|---|
| The Hague | 23-01-1981 | WEBER |

EPO Form 1503.1  06.78